(19) Europäisches Patentamt

European Patent Office

Office européen des brevets

(11) **EP 4 753 345 A1**

(12) **EUROPEAN PATENT APPLICATION**

(43) Date of publication:
03.06.2026 Bulletin 2026/23

(21) Application number: 25201684.5

(22) Date of filing: 11.09.2025

(51) International Patent Classification (IPC):
*H04W 56/00* (2009.01)

(52) Cooperative Patent Classification (CPC):
H04W 56/0015

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.11.2024 KR 20240172326

(71) Applicant: SAMSUNG SDI CO., LTD.
Yongin-si, Gyeonggi-do 17084 (KR)

(72) Inventor: KIM, Min Su
16678 Suwon-si (KR)

(74) Representative: Marks & Clerk LLP
15 Fetter Lane
London EC4A 1BW (GB)

(54) **MASTER WIRELESS COMMUNICATION DEVICE, SLAVE WIRELESS COMMUNICATION DEVICE, AND OPERATING METHOD THEREOF**

(57) The present disclosure relates to a master wireless communication device, a slave wireless communication device, and an operating method thereof, and a technical problem to be solved is to propose a mechanism that enables a master battery management system (BMS) and a plurality of slave BMSs to self-correct a radio frequency (RF) offset during RF-based wireless communication. To this end, the present disclosure is directed to providing a configuration that enables measuring relative RF offset data between wireless communication devices and estimating an absolute RF offset on a basis of the measured relative RF offset data.

FIG. 1

EP 4 753 345 A1

**Description**

**FIELD**

Aspects of embodiments of the present disclosure relate to a master wireless communication device, a slave wireless communication device, and an operating method thereof.

**BACKGROUND**

A battery system applied to electrical vehicles and the like may include a plurality of battery packs including battery modules and a slave battery management system (BMS) that manages the battery modules. Further, the battery system may further include a master BMS that communicates with a vehicle system and manages a plurality of battery packs. In most battery packs, wired BMSs are used, but the use of wired BMSs causes problems such as increased weight, decreased reliability, and difficulty in maintenance due to complex wiring.

Accordingly, recently, in order to solve problems such as poor quality of electrical wiring related to wire cables and connectors, frequent maintenance, etc., and to reduce the weight of electric vehicles and increase mileage, research and development on methods of wirelessly communicating between a master BMS and a plurality of slave BMSs is increasing.

The herein information disclosed in this Background section is for enhancement of understanding of the background of the present disclosure, and therefore, it may contain information that does not constitute related (or prior) art.

**SUMMARY**

The present disclosure is directed to providing a master wireless communication device, a slave wireless communication device, and an operating method thereof, in which a master battery management system (BMS) and a plurality of slave BMSs can self-correct radio frequency (RF) offsets during RF-based wireless communication.

However, objects that the present disclosure intends to achieve are not limited to the herein-described objects and other objects that are not described may be clearly understood by those skilled in the art from the following description.

According to aspects of the present disclosure, there is provided a master wireless communication device, which includes a first wireless communication unit for RF-based wireless communication, and a first processor configured to measure first relative RF offset data with respect to a plurality of slave wireless communication devices through the first wireless communication unit, receive second relative RF offset data from each slave wireless communication device, estimate each of a first absolute RF offset and a second absolute RF offset of each slave wireless communication device on a basis of the first relative RF offset data and the second relative RF offset data, correct an RF offset of the first wireless communication unit on a basis of the first absolute RF offset, and transmit to each slave wireless communication device the second absolute RF offset.

The first wireless communication unit may include a first antenna array and a first radio frequency integrated circuit (RFIC) including an oscillator.

The first processor may compare a frequency of an RF signal received from each slave wireless communication device with an oscillation frequency of an oscillation signal generated in the oscillator of the first RFIC to measure the first relative RF offset data with respect to each slave wireless communication device.

The first processor may compare an oscillation frequency of an oscillation signal generated in the oscillator of the first RFIC with a preset reference frequency to measure a current RF offset.

The master wireless communication device may further include a first temperature sensor configured to measure a first temperature inside the first RFIC, wherein the first processor may apply the first temperature to a learning model to predict an RF offset and initially correct the current RF offset using the predicted RF offset.

The first processor may apply the first relative RF offset data and the second relative RF offset data to a distributed consensus algorithm to estimate the first absolute RF offset and the second absolute RF offset.

The distributed consensus algorithm may repeatedly perform a process of setting initial values of a transmitting RFIC estimation offset and a receiving RFIC estimation offset to "0," calculating a first RF offset difference using a relative RF offset between a transmitting RFIC and a receiving RFIC, the transmitting RFIC estimation offset, and the receiving RFIC estimation offset, updating the transmitting RFIC estimation offset and the receiving RFIC estimation offset using the first RF offset difference, and calculating a second RF offset difference using the updated transmitting RFIC estimation offset and receiving RFIC estimation offset, and determine an estimation offset when estimation offsets of the transmitting RFIC and the receiving RFIC converge, as an absolute RF offset.

When second signal quality data is received from each slave wireless communication device, the first processor may calculate a first weight for the first relative RF offset data on a basis of first signal quality data measured by itself, calculate a second weight for the second relative RF offset data on a basis of the second signal quality data, apply the first relative RF offset and the first weight to a distributed consensus algorithm to estimate the first absolute RF offset, and apply the second relative RF offset and the second weight to the distributed consensus algorithm to estimate the second absolute RF offset.

The first processor may dynamically adjust an RF offset correction cycle on the basis of a change in RF offset of the first wireless communication unit and at least one of the plurality of slave wireless communication devices.

According to aspects of the present disclosure, there is provided a slave wireless communication device, which includes a second wireless communication unit for RF-based wireless communication, and a second processor configured to measure second relative RF offset data with respect to a peripheral wireless communication device through the second wireless communication unit, transmit the second relative RF offset data to a master wireless communication device through the second wireless communication unit, and when a second absolute RF offset is received from the master wireless communication device, correct an RF offset of the second wireless communication unit on a basis of the second absolute RF offset.

According to aspects of the present disclosure, there is provided an operating method of a master wireless communication device, which includes measuring, by the master wireless communication device, first relative RF offset data with respect to a plurality of slave wireless communication devices through a first wireless communication unit, when the master wireless communication device receives second relative RF offset data from each slave wireless communication device, estimating, by the master wireless communication device, each of a first absolute RF offset and a second absolute RF offset of each slave wireless communication device on a basis of the first relative RF offset data and the second relative RF offset data, and correcting, by the master wireless communication device, an RF offset of the first wireless communication unit on a basis of the first absolute RF offset and transmitting the second absolute RF offset to each slave wireless communication device.

At least some of the above and other features of the invention are set out in the claims.

## BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:

FIG. 1 is a diagram schematically illustrating a configuration of a battery pack according to embodiments of the present disclosure;

FIG. 2 is a block diagram schematically illustrating a configuration of a master wireless communication device according to embodiments of the present disclosure;

FIG. 3 is a block diagram schematically illustrating a configuration of a slave wireless communication device according to embodiments of the present disclosure;

FIG. 4 is a diagram for describing a method for correcting radio frequency (RF) offsets of a slave wireless communication device and a master wireless communication device according to embodiments of the present disclosure;

FIG. 5 is a diagram for describing a method for correcting RF offsets of a slave wireless communication device and a master wireless communication device according to embodiments of the present disclosure;

FIG. 6 is a flowchart for describing a method for correcting an RF offset of a slave wireless communication device according to embodiments of the present disclosure;

FIG. 7 is a flowchart for describing a method for correcting an RF offset of a master wireless communication device according to embodiments of the present disclosure; and

FIG. 8 is a flowchart for describing a distributed consensus algorithm according to embodiments of the present disclosure.

## DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked," or "connected" to another element, the elements may be directly "coupled," "linked," or "connected" to each other, or an intervening element may be present therebetween, through which the element may be "coupled," "linked," or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

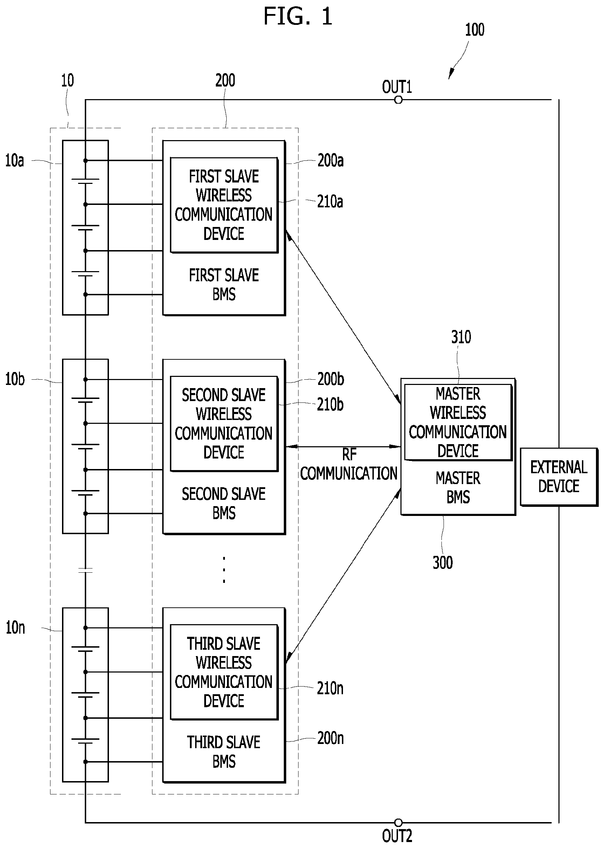

FIG. 1 is a diagram schematically illustrating a configuration of a battery pack according to embodiments of the present disclosure.

Referring to FIG. 1, a battery pack 100 according to embodiments of the present disclosure may include a plurality of battery modules 10a, 10b, ..., 10n (hereinafter referred to as "10"), a plurality of slave battery management systems (BMSs) 200a, 200b, ..., 200n (hereinafter referred to as "200"), and a master BMS 300.

When power is applied to the battery pack 100, power may be supplied to the master BMS 300 and the plurality of slave BMSs 200. When power is supplied to the master BMS 300 and the plurality of slave BMSs 200, the master BMS 300 and the plurality of slave BMSs 200 may each perform self-diagnosis. When the self-diagnosis is completed, the master BMS 300 may initialize a radio frequency (RF)-based network and assign a unique ID to each slave BMS 200. Further, the master BMS 300 may broadcast accurate time information to perform time synchronization with the plurality of slave BMSs 200.

The plurality of battery modules 10 may each include a plurality of battery cells connected in series and/or in parallel. In some embodiments, the battery cells may be rechargeable secondary batteries.

The plurality of slave BMSs 200 may be installed to be in a one-to-one correspondence with the plurality of battery modules 10. Each of the plurality of slave BMSs 200 may be electrically coupled to any one of the plurality of battery modules 10, in which the corresponding slave BMS 200 is installed. Therefore, the number of slave BMSs 200 may be equal to the number of battery modules 10.

For example, a first slave BMS 200a may be electrically coupled to a first battery module 10a, a second slave BMS 200b may be electrically coupled to a second battery module 10b, and a third slave BMS 200c may be electrically coupled to a third battery module 10c.

The slave BMS 200 may obtain battery status information on the battery module 10 electrically coupled to the corresponding slave BMS 200. Here, the battery status information may include at least one of a cell voltage, a cell current, and a cell temperature of each battery cell included in each battery module 10. Further, the battery status information may include at least one of a module voltage, which is a voltage at both ends of the battery module 10, and a module current, which is a current flowing through the battery module 10.

The slave BMS 200 may include a second wireless communication unit 220. For example, the second wireless communication unit 220 may include a radio frequency integrated circuit (RFIC). The slave BMS 200 may perform wireless communication with the master BMS 300 on the basis of an RF signal through the second wireless communication unit 220.

The slave BMS 200 may transmit the battery status information to the master BMS 300 through the second wireless communication unit 220.

The slave BMS 200 may perform a cell balancing function for the battery cells included in the battery module 10.

The slave BMS 200 may perform wireless communication with the master BMS 300 using its own pre-assigned ID, and the master BMS 300 may store the ID that is pre-assigned to the slave BMS 200. Here, the ID may be identification information for distinguishing the plurality of slave BMSs 200.

In order to perform such operations, the slave BMS 200 may include various components such as a fuse, a current sensing element, a thermistor, a switch, a balancer, etc. and, in most cases, additionally includes a micro controller unit (MCU) or a battery monitoring integrated chip (BMIC) to link with and control these components.

Meanwhile, an RF offset may occur in the slave BMS 200 due to various factors such as a temperature change, component aging, etc. Since the accuracy and reliability of RF communication may directly affect the performance and safety of the slave BMS 200, correction of the RF offset may be performed. Therefore, the slave BMS 200 should perform an operation of correcting the RF offset in order to improve RF communication performance.

Accordingly, the slave BMS 200 may include a slave wireless communication device 210 for correcting the RF offset. The slave wireless communication device 210 is provided as a component of the slave BMS 200 so that wireless communication with the master BMS 300 may be performed based on an RF signal.

The slave wireless communication device 210 may measure a relative RF offset between two wireless communication devices through RF communication with at least one of the peripheral slave BMS 200 and the master BMS 300 and transmit the measured relative RF offset to the master BMS 300 through the second wireless communication unit 220.

For example, a battery pack including first to third slave BMSs 200a, 200b, and 200c and a master BMS 300 will be described. In this case, a first slave wireless communication device 210a of the first slave BMS 200a may measure each of a relative RF offset with respect to a second slave wireless communication device 210b of the second slave BMS 200b, a relative RF offset with respect to a third slave wireless communication device 210c of the third slave BMS 200c, and a relative RF offset with respect to a master wireless communication device 310 of the master BMS 300. The second slave wireless communication device 210b of the second slave BMS 200b may measure each of a relative RF offset with respect to the first slave wireless communication device 210a of the first slave BMS 200a, a relative RF offset with respect to the third slave wireless communication device 210c of the third slave BMS 200c, and a relative RF offset with respect to the master wireless communication device 310 of the master BMS 300. The third slave wireless communication device 210c of the third slave BMS 200c may measure each of a relative RF offset with respect to the first slave wireless communication device 210a of the first slave BMS 200a, a relative RF offset with respect to the second slave wireless communication device 210b of the second slave BMS 200b, and a relative RF offset with respect to the master wireless communication device 310 of the master BMS 300. The master wireless communication device 310 of the master BMS 300 may measure each of a relative RF offset with respect to the first slave wireless communication device 210a of the first slave BMS 200a, a relative RF offset with respect to the second slave wireless communication device 210b of the second slave BMS 200b, and a relative RF offset with respect to the third slave wireless communication device 210c of the third slave BMS 200c.

In this way, the master BMS 300 and each of the plurality of slave BMSs 200 may measure the relative RF offsets with respect to the peripheral BMSs through RF communication. For example, when a total number of the master BMS 300 and the plurality of slave BMSs 200 is n, a total of $n(n-1)$ relative RF offset measurements may be performed.

The slave wireless communication device 210 may correct its RF offset on the basis of an absolute RF offset when an RF offset correction command including the absolute RF offset is received from the master BMS 300.

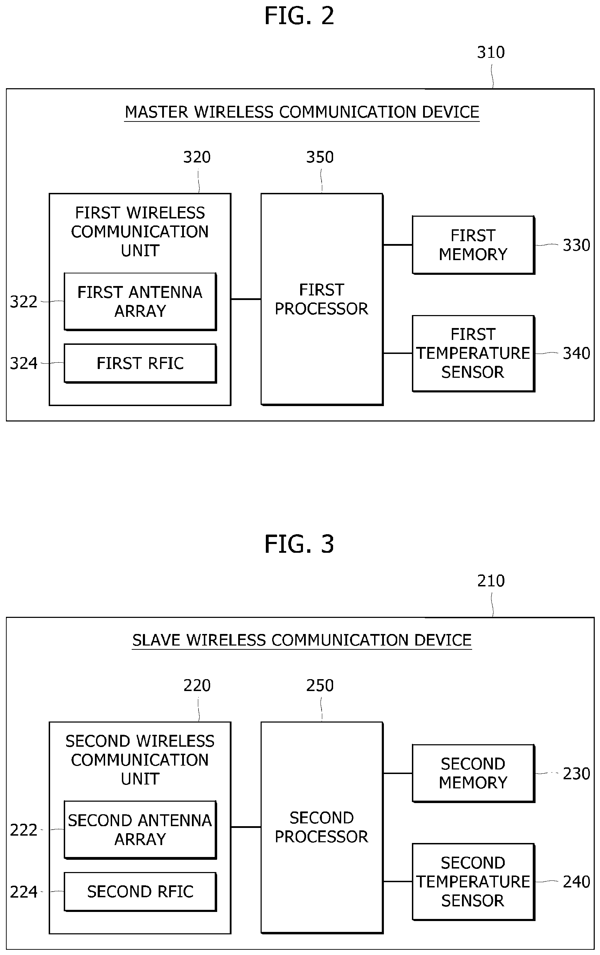

A detailed description of the slave wireless communication device 210 will be described later with reference to FIG. 3.

The master BMS 300 is a component that integrates and controls the plurality of slave BMSs 200, and may be operably coupled to the plurality of slave BMSs 200 through wireless communication.

The master BMS 300 may wirelessly communicate with each of the plurality of slave BMSs 200 to transmit various types of control signals or receive battery status information.

The master BMS 300 may include a first wireless communication unit 320, receive the battery status information on the battery module 10 from the plurality of slave BMSs 200 through the first wireless communication unit 320, and integrate and manage the plurality of slave BMSs 200. Here, the first wireless communication unit 320 may include an RFIC and the master BMS 300 may perform wireless communication with each of the plurality of slave BMSs 200 on the basis of an RF signal.

The master BMS 300 may receive the battery status information from the plurality of slave BMSs 200 through RF communication, integrate and manage the plurality of slave BMSs 200, and measure at least one of a battery pack voltage and a battery pack current to diagnose the status of the battery pack 100.

The master BMS 300 may transmit various types of control commands or receive the battery status information through RF communication with each of the plurality of slave BMSs 200. The master BMS 300 may calculate a state of charge (SOC), a state of health (SOH), etc. of each battery module 10 or determine whether each battery module 10 has overvoltage or undervoltage or is overcharged or over-discharged on the basis of the battery status information received from the slave BMS 200.

The master BMS 300 may be connected to an upper controller (not illustrated). The master BMS 300 may transmit information on the status and control of the battery to the upper controller or control the operation of the battery pack 100 on the basis of a control signal applied from the upper controller. The master BMS 300 may communicate with the upper controller to receive commands and information and may manage and control at least one slave BMS 200 included in the battery pack 100 according to the received commands. Here, the upper controller may be a control unit of an upper system (e.g., an automobile, an energy storage system (ESS) system, etc.) in which the battery pack 100 is mounted.

The master BMS 300 may periodically check a response of each slave BMS 200, and when a non-responsive slave BMS 200 is detected, attempt to reconnect to the corresponding slave BMS 200, and thus the connectivity between the slave BMS 200 and the master BMS 300 may be checked.

The master BMS 300 may set an optimal path with the slave BMS 200 on the basis of a signal strength. When a failure occurs in the slave BMS 200, the master BMS 300 may switch the path of the corresponding slave BMS 200 to an alternative path.

The master BMS 300 may optimize communication performance by monitoring communication quality indicators. Here, the communication quality indicators may include, for example, a signal-to-noise ratio (SNR), a bit error rate (BER), etc.

Meanwhile, an RF offset may occur in the master BMS 300 due to various factors such as a temperature change, component aging, etc. Since the accuracy and reliability of RF communication directly affect the performance and safety of the master BMS 300, correction of the RF offset may be performed. Therefore, the master BMS 300 is configured to perform an operation of correcting the RF offset in order to improve RF communication performance.

Accordingly, the master BMS 300 may include a master wireless communication device 310 for correcting the RF offset. The master wireless communication device 310 is provided as a component of the master BMS 300 so that wireless communication with the slave BMS 200 may be performed based on an RF signal.

The master wireless communication device 310 may communicate with each slave BMS 200 through RF communication to measure a relative RF offset therebetween.

The master wireless communication device 310 may apply relative RF offset data measured from each slave wireless communication device 210 to a distributed consensus algorithm to estimate an absolute RF offset, and correct its own RF offset using the estimated absolute RF offset.

The master wireless communication device 310 may receive the relative RF offset data from the slave wireless communication device 210 and apply the relative RF offset data to the distributed consensus algorithm to estimate the absolute RF offset of each slave wireless communication device 210.

The master wireless communication device 310 may transmit the absolute RF offset of each slave wireless communication device 210 to the corresponding slave wireless communication device 210.

When the RF offset correction of the master wireless communication device 310 and the slave wireless communication devices 210 is completed, the master wireless communication device 310 and the slave wireless communication devices 210 may re-measure the relative RF offset data to verify the effect of the RF offset correction.

The master wireless communication device 310 and the slave wireless communication devices 210 may perform RF offset correction at regular periods.

A detailed description of the master wireless communication device 310 will be described with reference to FIG. 2.

FIG. 2 is a block diagram schematically illustrating a configuration of a master wireless communication device according to embodiments of the present disclosure.

Referring to FIG. 2, the master wireless communication device 310 according to embodiments of the present disclosure may include the first wireless communication unit 320, a first memory 330, and a first processor 350.

The first wireless communication unit 320 may be a component for RF-based wireless communication.

The first wireless communication unit 320 may include a first antenna array 322 and a first RFIC 324.

The first antenna array 322 may include a plurality of antenna elements and may have an N*N array structure (wherein N is a natural number).

The first RFIC 324 may include a transmitting filter, a receiving filter, an amplifier, a mixer, an oscillator (local oscillator), a digital-to-analog converter (DAC), an analog-to-digital converter (ADC), etc. Here, the oscillator may generate an oscillation signal having an oscillation frequency.

The first RFIC 324 may measure a current RF offset under the control of the first processor 350. In this case, the first RFIC 324 may compare the oscillation frequency of the oscillation signal generated in the oscillator with a preset reference frequency (target frequency) to measure the current RF offset. That is, the first RFIC 324 may utilize an internal phase-locked loop (PLL) to measure an RF offset, which represents a difference between the current oscillation frequency and the target frequency, and convert the RF offset into a digital value. In this case, the first RFIC 324 may convert a frequency deviation into a voltage level through a phase detector of the PLL, convert the voltage level into which the frequency deviation is converted into a digital value through an ADC, and quantify an RF offset value. The first RFIC 324 may store the measured RF offset value in the first memory 330 and utilize the stored RF offset value to calculate relative RF offsets with respect to other RFICs.

The first RFIC 324 may perform bidirectional communication with a peripheral slave wireless communication device 210 (an RFIC of the slave wireless communication device 210) under the control of the first processor 350, and receive an RF signal from a counterpart slave wireless communication device 210 through the bidirectional communication. The first RFIC 324 may transmit the RF signal received from the counterpart slave wireless communication device and the oscillation frequency of the oscillation signal generated in the oscillator to the first processor 350.

Meanwhile, since the frequency characteristics of the oscillator in the first RFIC 324 are sensitive to a temperature, an operating temperature of the oscillator that directly affects RF communication performance may be measured.

Accordingly, the master wireless communication device 310 may further include a first temperature sensor 340 that measures an internal temperature of the first RFIC 324. The first temperature sensor 340 may measure the temperature inside the first RFIC 324, in particular, a temperature near a region in which the oscillator is located. That is, the first temperature sensor 340 may measure the temperature near the region in which the oscillator is located in order to most accurately reflect the operating temperature of the oscillator that directly affects RF communication performance.

The first temperature sensor 340 may be implemented as a bandgap-based temperature detection circuit and may be placed physically close to the oscillator to monitor a change in temperature of the oscillator in real time. Accordingly, the first temperature sensor 340 may accurately estimate and compensate for the RF offset fluctuations due to the temperature change.

At least one command executed by the first processor 350 may be stored in the first memory 330. In particular, commands (programs, applications, or applets) that enable measuring relative RF offsets, commands (programs, applications, or applets) that enable estimating absolute RF offsets on the basis of the relative RF offsets, commands (programs, applications, or applets) that enable correcting RF offsets on the basis of the absolute RF offsets, and the like may be stored in the first memory 330, and the stored commands may be selected by the first processor 350 accordingly. The first memory 330 may be implemented as a volatile storage medium and/or a non-volatile storage medium, and may be implemented as, for example, a read-only memory (ROM), a random access memory (RAM), a flash memory, or an electrically erasable programmable read-only memory (EEPROM).

The first processor 350 is a subject that controls the components of the master wireless communication device 310 and may be implemented as a central processing unit (CPU) or a system on chip (SoC), and the first processor 350 may control a plurality of hardware components connected to the processor or software components by running an operating system or application and perform various data processing and operations. The first processor 350 may be configured to execute at least one command stored in the first memory 330 and store data on a result of the execution in the first memory 330. In particular, in the present embodiment, the first processor 350 may correspond to an analog front end (AFE) IC or MCU of a master BMS.

The first processor 350 may control the first RFIC 324 to measure a current RF offset through self-diagnosis. The first RFIC 324 may measure the current RF offset under the control of the first processor 350.

The first processor 350 may measure a relative RF offset between the first RFIC 324 and a second RFIC 224 of each slave wireless communication device 210 through RF communication with each slave wireless communication device 210.

The first processor 350 may receive an oscillation frequency of an oscillation signal and an RF signal of the slave wireless communication device 210 from the first RFIC 324, and compare the oscillation frequency of the oscillation signal with a frequency of the RF signal to measure the relative RF offset with respect to the slave wireless communication device 210. That is, the first processor 350 may compare the frequency of the RF signal received from the slave wireless communication device 210 with the oscillation frequency of the oscillation signal generated in the oscillator of the first RFIC 324 to measure the relative RF offset that represents a difference between the frequency of the RF signal and the oscillation frequency of the oscillation signal.

Specifically, when the second RFIC 224 of the slave wireless communication device 210 transmits a first RF signal on the basis of its own oscillator, the first RFIC 324 may demodulate the first RF signal on the basis of its own oscillator and transmit the demodulated first RF signal to the first processor 350. The first processor 350 may measure a difference between a frequency of the demodulated first RF signal and the oscillation frequency of the oscillation signal of the oscillator of the first RFIC 324 as the relative RF offset between the first RFIC 324 and the second RFIC 224.

For example, when the second RFIC 224 transmits a 2.4 GHz RF signal to the first RFIC 324 and the oscillator of the first RFIC 324 operates at 3 GHz, the first processor 350 may measure 0.6 GHz as the relative RF offset between the first RFIC 324 and the second RFIC 224.

In this way, the first processor 350 may measure a relative RF offset between RFICs through bidirectional communication between the RFICs. The measurement of the relative RF offset may enable accurate determination of frequency differences between RFICs even when absolute RF offset values of the respective RFICs are not known, thereby enabling RF communication synchronization of the entire system.

For example, when the first to third slave BMSs 200a, 200b, and 200c are provided, the first processor 350 may measure each of a relative RF offset between the first RFIC 324 and the first slave wireless communication device 210a, a relative RF offset between the first RFIC 324 and the second slave wireless communication device 210b, and a relative RF offset between the first RFIC 324 and the third slave wireless communication device 210c.

The first processor 350 may control so that the relative RF offset between the first RFIC 324 and each slave wireless communication device 210 is measured multiple times, and may perform statistical processing on the relative RF offset values measured multiple times. Here, the statistical processing may include calculation of a mean, a standard deviation, etc.

When the first processor 350 receives relative RF offset data from each of the plurality of slave wireless communication devices 210, the first processor 350 may estimate each of an absolute RF offset of the first RFIC 324 and an absolute RF offset of each slave wireless communication device 210 using first relative RF offset data and second relative RF offset data of each slave wireless communication device 210. Here, the first relative RF offset data may mean relative RF offset data measured by the first processor 350, and the second relative RF offset data may mean relative RF offset data measured by each slave wireless communication device 210.

The first processor 350 may apply the first relative RF offset data and the second relative RF offset data to a distributed consensus algorithm to estimate each of a first absolute RF offset and a second absolute RF offset of the first RFIC 324 and each slave wireless communication device 210. Here, the first absolute RF offset may be a value for correcting the RF offset of the first RFIC 324, and the second absolute RF offset may be a value for correcting the RF offset of the slave wireless communication device 210 (the second RFIC 224).

Hereinafter, a method for the first processor 350 of estimating an absolute RF offset using a distributed consensus algorithm will be described in detail.

The first processor 350 may set an initial RFIC estimation offset of the first RFIC 324 and an initial RFIC estimation offset of the second RFIC 224 of each slave wireless communication device 210 to "0," and calculate an RF offset difference using a relative RF offset, a transmitting RFIC estimation offset, and a receiving RFIC estimation offset. That is, the first processor 350 may calculate the RF offset difference using the following Equation 1.

RF offset difference = relative RF offset - (transmitting RFIC estimation offset - receiving RFIC estimation offset) [Equation 1]

Here, initial values of the transmitting RFIC estimation offset and the receiving RFIC estimation offset are "0," and thereafter, the transmitting RFIC estimation offset and the receiving RFIC estimation offset may be updated using the following Equation 2.

$$[\text{Equation 2}]$$

$$\text{Transmitting RFIC estimation offset} \mathrel{+}= \text{RF offset difference}/2$$

$$\text{Receiving RFIC estimation offset} \mathrel{-}= \text{RF offset difference}/2$$

The first processor 350 may repeatedly perform Equations 1 and 2 until values of estimation offsets of respective RFICs converge (i.e., reach a stable state).

Therefore, in the distributed consensus algorithm, the transmitting RFIC estimation offset and the receiving RFIC estimation offset may have different values for each iteration.

For example, a case in which a relative RF offset between a transmitting RFIC and a receiving RFIC is "2000" will be described. In this case, in a first iteration, an RF offset difference may be "2000" through Equation 1. After the first iteration, the transmitting RFIC estimation offset may be updated "+1000(2000/2)," and the receiving RFIC estimation offset may be updated "-1000(-2000/2)." In a second iteration, the RF offset difference may be calculated using the updated transmitting RFIC estimation offset and receiving RFIC estimation offset. In this case, the first processor 350 may calculate "2000-((+1000)-(-1000))=0" as the RF offset difference. When the RF offset difference becomes "0," no further adjustment may be performed.

The herein process may be performed simultaneously on relative RF offsets of all the RFIC pairs, and the estimation offset of each RFIC may be adjusted based on the influence of all the relative RF offsets associated with the each RFIC. The first processor 350 may estimate an absolute RF offset value of each RFIC that satisfies all relative RF offset relationships as much as possible through such an iterative adjustment process.

The first processor 350 may calculate an amount of changes in estimation offset values of all the RFICs through repeated calculations of Equations 1 and 2, and determine that a convergence state reaches when the amount of changes in estimation offset values falls below a predefined threshold value (e.g., 0.001Hz). The amount of changes in estimation offset values may indicate how much the estimation offset of each RFIC has changed between two consecutive iterations of calculation. For example, when an estimation offset of a specific RFIC is +500 Hz in a previous iteration and +502 Hz in a current iteration, the amount of changes in estimation offset of the specific RFIC may be 2 Hz. In the convergent process, gradual adjustment is made by distributing 1/2 of the offset difference to the transmitting RFIC and receiving RFIC at each iteration, and thus may ensure the stability of the system and prevent abrupt changes. For example, a large adjustment is made in the first iteration, and an adjustment range is gradually reduced in subsequent iterations, and thus the estimation offsets of all the RFICs may finally converge to a consistent value. In this case, a threshold value for determining convergence may be set in consideration of the system requirements and the stability of RF communication, and may be generally set to a sufficiently small value that does not affect RF communication.

The first processor 350 may perform Equations 1 and 2 repeatedly until the amount of changes in estimation offsets of all the RFICs becomes less than or equal to the threshold value, and determine the estimation offset value of each RFIC when the amount of changes in estimation offset value becomes less than or equal to the threshold value as the absolute RF offset.

Meanwhile, repeated iteration of Equations 1 and 2 may be performed until the amount of changes in estimation offset becomes less than or equal to the threshold value. In order to prevent infinite iteration of Equations 1 and 2, the first processor 350 may set a maximum threshold number of iterations (e.g., 100 times), and when the number of iterations exceeds the maximum threshold number of iterations, the first processor 350 may terminate the distributed consensus algorithm and determine an optimal estimation offset among the estimation offsets up to now as the absolute RF offset.

As described herein, the first processor 350 may determine each of the first absolute RF offset of the first RFIC 324 and the second absolute RF offset of each slave wireless communication device 210 (the second RFIC 224) using the distributed consensus algorithm.

The first processor 350 may correct the RF offset of the first RFIC 324 using the first absolute RF offset. In this case, the first processor 350 may compare the current RF offset of the first RFIC 324 with the absolute RF offsets to calculate a correction value, and may apply the calculated correction value to the current RF offset to calculate a final offset. The first processor 350 may correct the current RF offset of the first RFIC 324 to the final offset.

The first processor 350 may correct the RF offset of the first RFIC 324 using an adaptive algorithm such as a Kalman filter. The first processor 350 may prevent abrupt offset changes and consider changes over time using an adaptive algorithm such as a Kalman filter.

The first processor 350 may transmit the corresponding second absolute RF offset to each slave wireless communication device 210. In this case, the first processor 350 may transmit an RF offset correction command including identification information, the second absolute RF offset, etc., of the slave BMS 200 to the slave wireless communication device 210 through the first wireless communication unit 320. Then, the slave wireless communication device 210 may correct its own RF offset using the second absolute RF offset.

Meanwhile, the master wireless communication device 310 and each slave wireless communication device 210 may have different signal qualities such as received signal strength (RSSI), BER, etc., during communication with other wireless communication devices. Since signal quality affects the accuracy and reliability of RF communication, an RF offset may be corrected in consideration of the signal quality in order to improve RF communication performance.

Accordingly, the master wireless communication device 310 and the slave wireless communication device 210 may each measure the signal quality during RF communication. The slave wireless communication device 210 may transmit measured second signal quality data together with second relative RF offset data to the master wireless communication device 310. In this case, the first processor 350 may receive the second signal quality data and the second relative RF offset data from the plurality of slave wireless communication devices 210 through the first wireless communication unit 320.

The first processor 350 may calculate weights for the relative RF offset data on the basis of the signal quality data, and apply the weights and the relative RF offset data to the distributed consensus algorithm to estimate the absolute RF offset. In this case, the first processor 350 may calculate each of first and second weights for first and second relative RF offset data on the basis of first signal quality data measured by itself and the second signal quality data received from the slave wireless communication device 210, and apply the first and second weights to the distributed consensus algorithm to estimate the first and second absolute RF offsets.

That is, the first processor 350 may calculate the first weight for the first relative RF offset data on the basis of the first signal quality data and calculate the second weight for the second relative RF offset data on the basis of the second signal quality data. Specifically, the first processor 350 may evaluate a first reliability for a first relative RF offset on the basis of the first signal quality data and evaluate a second reliability for a second relative RF offset on the basis of the second signal quality data. The first processor 350 may calculate the first weight for the first relative RF offset on the basis of the first reliability for the first relative RF offset and calculate the second weight for the second relative RF offset on the basis of the second reliability for the second relative RF offset. In this case, the first processor 350 may assign a high weight to a relative RF offset having a high signal quality (high RSSI, low BER) and a low weight to a relative RF offset having a low signal quality (low RSSI, high BER). The first processor 350 may apply the first relative RF offset and the first weight to the distributed consensus algorithm to estimate the first absolute RF offset, and apply the second relative RF offset and the second weight to the distributed consensus algorithm to estimate the second absolute RF offset.

The first processor 350 may correct the RF offset of the first RFIC 324 using the first absolute RF offset. The first processor 350 may transmit the corresponding second absolute RF offset to each slave wireless communication device 210.

In this way, the first processor 350 may apply the weight dynamically calculated according to the signal quality data to estimate the absolute RF offset, and thus the accuracy and efficiency of RF offset correction can be improved.

The first processor 350 may dynamically adjust an RF offset correction cycle on the basis of a change in RF offset. In this case, the first processor 350 may adjust the RF offset correction cycle when there is a wireless communication device (an RFIC) whose RF offset change is greater than or equal to a preset threshold value. Here, the RF offset change may mean a difference between the current RF offset of each RFIC and the previously corrected offset value or an offset change rate between consecutive correction cycles, and the current RF offset may mean the RF offset measured by each RFIC through self-diagnosis.

For example, when there is a wireless communication device (an RFIC) in which the difference between the current RF offset and the previously corrected offset value is greater than or equal to a preset first threshold value or when there is a wireless communication device in which the offset change rate between consecutive correction cycles is greater than or equal to a preset second threshold value, the first processor 350 may shorten the RF offset correction cycle. When there is a wireless communication device in which the difference between the current RF offset and the previously corrected offset value is less than or equal to a third threshold value or when there is a wireless communication device in which the offset change rate between consecutive correction cycles is less than or equal to a fourth threshold value, the first processor 350 may increase the RF offset correction cycle. Here, the third threshold value may be a value smaller than the first threshold value, and the fourth threshold value may be a value smaller than the second threshold value.

Since the master wireless communication device 310 and the plurality of slave wireless communication devices 210 form an interconnected network, when a change in RF offset greater than or equal to a threshold value is detected in one wireless communication device, the change in RF offset may affect relative RF offset relationships with all the wireless communication devices connected via the network. Accordingly, when the change in RF offset greater than or equal to the threshold value is detected in one wireless communication device, the first processor 350 may change the RF offset correction cycle.

Further, the first processor 350 may store the RF offset value together with current temperature information measured through the first temperature sensor 340 so that offset fluctuations according to temperature changes can be tracked. That is, the first processor 350 may continuously collect the temperature information measured through the first temperature sensor 340 and current RF offset data measured through self-diagnosis. The first processor 350 may model a relationship between the temperature and the RF offset using the collected temperature information and current RF offset data to generate a model. In this case, the first processor 350 may generate the model using a machine learning algorithm or the like. The first processor 350 may compare actual measurement results over time with predicted values to continuously update the model.

When a first temperature is received from the first processor 350, the first temperature sensor 340 may apply the first temperature to a model to predict the RF offset. The model may include a function of RF offsets against temperature. The model may be a learned model, such as a model trained on measurement data of corresponding temperatures and RF offsets. The first processor 350 may initially correct the current RF offset using the predicted RF offset. Thereafter, the first processor 350 may correct the RF offset using the first absolute RF offset estimated through the distributed consensus algorithm.

In this way, the first processor 350 may correct the RF offset on the basis of the first temperature measured through the first temperature sensor 340 and correct the RF offset using the first absolute RF offset through the distributed consensus algorithm, and thus, finally, the accuracy of the RF communication of the entire system can be improved.

FIG. 3 is a block diagram schematically illustrating a configuration of a slave wireless communication device according to embodiments of the present disclosure.

Referring to FIG. 3, the slave wireless communication device 210 according to embodiments of the present disclosure may include the second wireless communication unit 220, a second memory 230, and a second processor 250.

The second wireless communication unit 220 may be a component for RF-based wireless communication.

The second wireless communication unit 220 may include a second antenna array 222 and a second RFIC 224.

The second antenna array 222 may include a plurality of antenna elements and may have an N*N array structure (wherein N is a natural number).

The second RFIC 224 may include a transmitting filter, a receiving filter, an amplifier, a mixer, an oscillator (local oscillator), a DAC, an ADC, etc. Here, the oscillator may generate an oscillation signal having an oscillation frequency.

The second RFIC 224 may measure a current RF offset under the control of the second processor 250. In this case, the second RFIC 224 may compare the oscillation frequency of the oscillation signal generated in the oscillator with a preset reference frequency (target frequency) to measure the current RF offset. That is, the second RFIC 224 may utilize an internal phase-locked loop (PLL) to measure an RF offset, which represents a difference between the current oscillation frequency and the target frequency, and convert the RF offset into a digital value. In this case, the second RFIC 224 may convert a frequency deviation into a voltage level through a phase detector of the PLL, convert the voltage level into which the frequency deviation is converted into a digital value through an ADC, and quantify an RF offset value. The second RFIC 224 may store the measured RF offset value in the second memory 230 and utilize the stored RF offset value to calculate relative RF offsets with respect to other RFICs.

The second RFIC 224 may perform bidirectional communication with a peripheral wireless communication device (an RFIC of the peripheral wireless communication device) under the control of the second processor 250, and receive an RF signal from a counterpart wireless communication device (an RFIC of the counterpart wireless communication device) through the bidirectional communication. The second RFIC 224 may transmit the RF signal received from the counterpart wireless communication device (the RFIC of the counterpart wireless communication device) and the oscillation frequency of the oscillation signal generated in the oscillator to the second processor 250.

Meanwhile, since the frequency characteristics of the oscillator in the second RFIC 224 are sensitive to a temperature, an operating temperature of the oscillator that directly affects RF communication performance may be measured.

Accordingly, the slave wireless communication device 210 may further include a second temperature sensor 240 that measures an internal temperature of the second RFIC 224. The second temperature sensor 240 may measure the temperature inside the second RFIC 224, in particular, a temperature near a region in which the oscillator is located. That is, the second temperature sensor 240 may measure the temperature near the region in which the oscillator is located in order to most accurately reflect the operating temperature of the oscillator that directly affects RF communication performance.

The second temperature sensor 240 may be implemented as a bandgap-based temperature detection circuit and may be placed physically close to the oscillator to monitor a change in temperature of the oscillator in real time. Accordingly, the second temperature sensor 240 may accurately estimate and compensate for the RF offset fluctuations due to the temperature change.

At least one command executed by the second processor 250 may be stored in the second memory 230. In particular, commands (programs, applications, or applets) that enable measuring relative RF offsets, commands (programs, applications, or applets) that enable correcting RF offsets on the basis of the absolute RF offsets, and the like may be stored in the second memory 230, and the stored commands may be selected by the second processor 250 accordingly. The second memory 230 may be implemented as a volatile storage medium and/or a non-volatile storage medium, and may be implemented as, for example, an ROM, an RAM, a flash memory, or an EEPROM.

The second processor 250 is a subject that controls the components of the slave wireless communication device 210 and may be implemented as a CPU or a SoC, and the second processor 250 may control a plurality of hardware components connected to the processor or software components by running an operating system or application and perform various data processing and operations. The second processor 250 may be configured to execute at least one command stored in the second memory 230 and store data on a result of the execution in the second memory 230. In particular, in the present embodiment, the second processor 250 may correspond to an AFE IC or MCU of a master BMS.

The second processor 250 may control the second RFIC 224 to measure a current RF offset through self-diagnosis. The second RFIC 224 may measure the current RF offset under the control of the second processor 250.

The second processor 250 may measure relative RF offsets between the second RFIC 224 and a peripheral slave wireless communication device 210 and the master wireless communication device 310 through RF communication with each of the peripheral slave wireless communication device 210 and the master wireless communication device 310.

The second processor 250 may receive the oscillation frequency of the oscillation signal and the RF signal of the counterpart wireless communication device from the second RFIC 224, and compare the oscillation frequency of the oscillation signal with a frequency of the RF signal to measure a relative RF offset with respect to the counterpart wireless communication device. That is, the second processor 250 may compare the frequency of the RF signal received from the counterpart wireless communication device with the oscillation frequency of the oscillation signal generated in the oscillator of the second RFIC 224 and measure the relative RF offset that represents a difference between the frequency of the RF signal and the oscillation frequency of the oscillation signal.

Specifically, when a transmitting RFIC of the slave wireless communication device 210 transmits a second RF signal on the basis of its own oscillator, the second RFIC 224 may demodulate the second RF signal on the basis of its own oscillator and transmit the demodulated second RF signal to the second processor 250. The second processor 250 may measure a difference between a frequency of the demodulated second RF signal and the oscillation frequency of the oscillation signal of the oscillator of the second RFIC 224 as a relative RF offset between the second RFIC 224 and the transmitting RFIC.

For example, when the transmitting RFIC transmits a 2.4 GHz RF signal to the second RFIC 224 and the oscillator of the second RFIC 224 operates at 3 GHz, the second processor 250 may measure 0.6 GHz as the relative RF offset between the second RFIC 224 and the transmitting RFIC.

In this way, the second processor 250 may measure a relative RF offset between RFICs through bidirectional communication between the RFICs. The measurement of the relative RF offset may enable accurate determination of frequency differences between RFICs even when absolute RF offset values of the respective RFICs are not known, thereby enabling RF communication synchronization of the entire system.

The second processor 250 may control so that the relative RF offset between the second RFIC 224 and the counterpart wireless communication device is measured multiple times, and may perform statistical processing on the relative RF offset values measured multiple times. Here, the statistical processing may include calculation of a mean, a standard deviation, etc.

The second processor 250 may transmit second relative RF offset data measured by the second RFIC 224 to the master wireless communication device 310 through the second wireless communication unit 220. In this case, the second processor 250 may transmit identification information of the slave BMS 200 and the second relative RF offset data to the master wireless communication device 310.

The second processor 250 may receive an RF offset correction command including the second absolute RF offset from the master wireless communication device 310 through the second wireless communication unit 220.

The second processor 250 may correct an RF offset of the second RFIC 224 using the second absolute RF offset included in the RF offset correction command. In this case, the second processor 250 may compare the current RF offset of the second RFIC 224 with the absolute RF offset to calculate a correction value, and may apply the calculated correction value to the current RF offset to calculate a final offset. The second processor 250 may correct the current RF offset of the second RFIC 224 to the final offset.

The second processor 250 may correct the RF offset of the second RFIC 224 using an adaptive algorithm such as a Kalman filter. The second processor 250 may prevent abrupt offset changes and consider changes over time using an adaptive algorithm such as a Kalman filter.

Meanwhile, the slave wireless communication device 210 may have different signal qualities such as RSSI and BER during communication with other slave wireless communication devices. Since signal quality affects the accuracy and reliability of RF communication, it is necessary to correct an RF offset in consideration of the signal quality in order to improve RF communication performance.

Accordingly, the second processor 250 may measure the signal quality during bidirectional communication between RFICs and transmit the measured second signal quality data together with second relative RF offset data to the master wireless communication device 310. In this case, the second processor 250 may receive the second absolute RF offset to which an adaptive weight is applied from the master wireless communication device 310.

The second processor 250 may correct the RF offset of the second RFIC 224 using the second absolute RF offset to which the adaptive weight is applied.

Since the second processor 250 corrects the RF offset of the second RFIC 224 using the second absolute RF offset to which the adaptive weight is applied, the accuracy and efficiency of the RF offset can be improved.

Further, the second processor 250 may store the RF offset value together with current temperature information measured through the second temperature sensor 240 so that offset fluctuations according to temperature changes can be tracked. That is, the second processor 250 may continuously collect the temperature information measured through the second temperature sensor 240 and current RF offset data measured through self-diagnosis. The second processor 250 may model a relationship between the temperature and the RF offset using the collected temperature information and current RF offset data to generate a model. In this case, the second processor 250 may generate the model using a machine learning algorithm or the like. The second processor 250 may compare actual measurement results over time with predicted values to continuously update the model.

When a second temperature is received from the second temperature sensor 240, the second processor 250 may apply the second temperature to a model to predict the RF offset. The model may include a function of RF offsets against temperature. The model may be a learned model, such as a model trained on measurement data of corresponding temperatures and RF offsets. The second processor 250 may initially correct the current RF offset using the predicted RF offset. Thereafter, the second processor 250 may correct the RF offset using the second absolute RF offset estimated through the distributed consensus algorithm.

In this way, the second processor 250 may correct the RF offset on the basis of the second temperature measured through the second temperature sensor 240 and correct the RF offset using the second absolute RF offset through the distributed consensus algorithm, and thus, finally, the accuracy of the RF communication of the entire system can be improved.

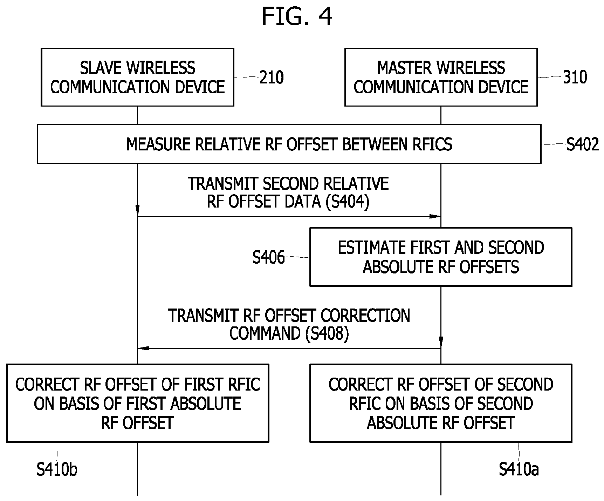

FIG. 4 is a diagram for describing a method for correcting RF offsets of a slave wireless communication device and a master wireless communication device according to embodiments of the present disclosure.

Referring to FIG. 4, a master wireless communication device 310 and a slave wireless communication device 210 each measure a relative RF offset between a first RFIC 324 and a second RFIC 224 through RF communication (S402).

Meanwhile, although one slave wireless communication device 210 is illustrated in the drawing, there may be a plurality of slave wireless communication devices 210. For example, when first and second slave wireless communication devices 210a and 210b are provided, the first slave wireless communication device 210a may measure each of a relative RF offset with respect to the second slave wireless communication device 210b and a relative RF offset with respect to the master wireless communication device 310. The second slave wireless communication device 210b may measure each of a relative RF offset with respect to the first slave wireless communication device 210a and a relative RF offset with respect to the master wireless communication device 310. The master wireless communication device 310 may measure each of a relative RF offset with respect to the first slave wireless communication device 210a and a relative RF offset with respect to the second slave wireless communication device 210b.

When operation S402 is performed, the slave wireless communication device 210 transmits measured second relative RF offset data to the master wireless communication device 310 (S404).

The first slave wireless communication device 210a may transmit second relative RF offset data including the relative RF offset with respect to the second slave wireless communication device 210b and the relative RF offset with respect to the master wireless communication device 310 to the master wireless communication device 310. The second slave wireless communication device 210b may transmit second relative RF offset data including the relative RF offset with respect to the first slave wireless communication device 210a and the relative RF offset with respect to the master wireless communication device 310 to the master wireless communication device 310. In this case, the first and second slave wireless communication devices 210a and 210b may measure the relative RF offset between RFICs multiple times, perform statistical processing on the relative RF offset values measured multiple times, and transmit the statistically processed second relative RF offset data to the master wireless communication device 310. Here, the statistical processing may include calculation of a mean, a standard deviation, etc.

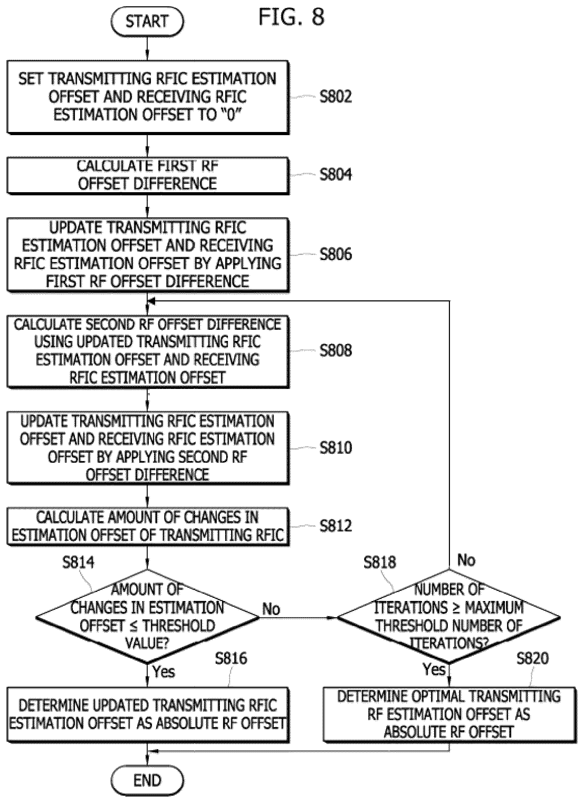

When operation S404 is performed, the master wireless communication device 310 applies first relative RF offset data measured by itself and the second relative RF offset data received from the slave wireless communication device 210 to a distributed consensus algorithm to estimate first and second absolute RF offsets (S406). In this case, the master wireless communication device 310 may estimate a first absolute RF offset using the first relative RF offset data and estimate a second absolute RF offset using the second relative RF offset data. A detailed description of the distributed consensus algorithm will be described with reference to FIG. 8.

When operation S406 is performed, the master wireless communication device 310 transmits an RF offset correction command including the second absolute RF offset to the slave wireless communication device 210 (S408).

When operation S408 is performed, the master wireless communication device 310 corrects its own RF offset using the first absolute RF offset (S410a), and the slave wireless communication device 210 corrects its own RF offset using the second absolute RF offset (S410b).

The master wireless communication device 310 may compare a current RF offset of the first RFIC 324 with the first absolute RF offset to calculate a correction value, apply the calculated correction value to the current RF offset to calculate a final offset, and correct the current RF offset of the first RFIC 324 to the final offset. The slave wireless communication device 210 may compare a current RF offset of the second RFIC 224 with the second absolute RF offset to calculate a correction value, apply the calculated correction value to the current RF offset to calculate a final offset, and correct the current RF offset of the second RFIC 224 to the final offset. In this case, the master wireless communication device 310 and the slave wireless communication device 210 may correct the RF offsets using an adaptive algorithm such as a Kalman filter. The master wireless communication device 310 and the slave wireless communication device 210 may prevent abrupt offset changes and consider changes over time using an adaptive algorithm such as a Kalman filter.

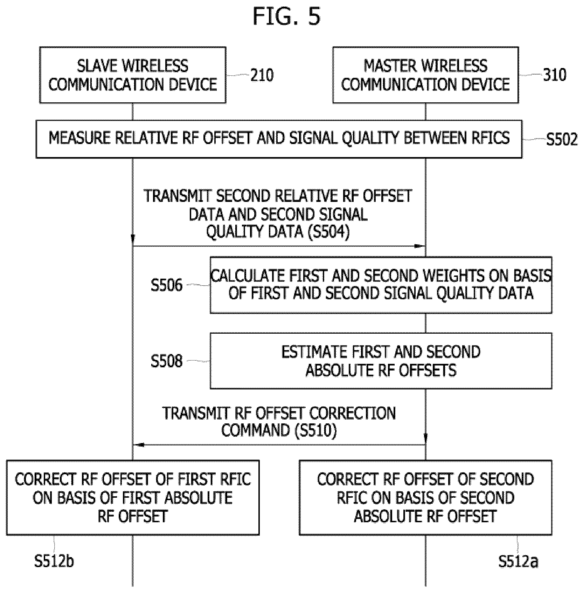

FIG. 5 is a diagram for describing a method for correcting RF offsets of a slave wireless communication device and a master wireless communication device according to embodiments of the present disclosure.

Referring to FIG. 5, a master wireless communication device 310 and a slave wireless communication device 210 each measures a relative RF offset and communication signal quality between a first RFIC 324 and a second RFIC 224 through RF communication (S502).

Meanwhile, although one slave wireless communication device 210 is illustrated in the drawing, there may be a plurality of slave wireless communication devices 210. For example, when first and second slave wireless communication devices 210a and 210b are provided, the first slave wireless communication device 210a may measure a relative RF offset and signal quality with respect to the second slave wireless communication device 210b and measure a relative RF offset and signal quality with respect to the master wireless communication device 310. The second slave wireless communication device 210b may measure a relative RF offset and signal quality with respect to the first slave wireless communication device 210a and measure a relative RF offset and signal quality with respect to the master wireless communication device 310. The master wireless communication device 310 may measure a relative RF offset and signal quality with respect to the first slave wireless communication device 210a and measure a relative RF offset and signal quality with respect to the second slave wireless communication device 210b.

When operation S502 is performed, the slave wireless communication device 210 transmits measured second relative RF offset data and second signal quality data to the master wireless communication device 310 (S504).

The first slave wireless communication device 210a may transmit second relative RF offset data including the relative RF offset with respect to the second slave wireless communication device 210b and the relative RF offset with respect to the master wireless communication device 310 to the master wireless communication device 310. In this case, the first slave wireless communication device 210a may transmit second signal quality data including the signal quality with respect to the second slave wireless communication device 210b and the signal quality with respect to the master wireless communication device 310 together with the second relative RF offset data to the master wireless communication device 310.

The second slave wireless communication device 210b may transmit second relative RF offset data including the relative RF offset with respect to the first slave wireless communication device 210a and the relative RF offset with respect to the master wireless communication device 310 to the master wireless communication device 310. In this case, the second slave wireless communication device 210b may transmit second signal quality data including the signal quality with respect to the first slave wireless communication device 210a and the signal quality with respect to the master wireless communication device 310 together with the second relative RF offset data to the master wireless communication device 310.

When operation S504 is performed, the master wireless communication device 310 calculates a first weight for first relative RF offset data on the basis of the first signal quality data measured by itself and calculates a second weight for the second relative RF offset data on the basis of the second signal quality data (S506). In this case, the master wireless communication device 310 may assign a high weight to a relative RF offset having a high signal quality (high RSSI, low BER) and a low weight to a relative RF offset having a low signal quality (low RSSI, high BER). For example, a plurality of weights for a plurality of slave wireless communication devices may be set to values in a ratio to each other that corresponds to the ratio of the values of a signal strength parameter (e.g. RSSI or BER) for the respective slave wireless communication devices.

When operation S506 is performed, the master wireless communication device 310 estimates a first absolute RF offset using the first weight and the first relative RF offset data and estimates a second absolute RF offset using the second weight and the second relative RF offset data (S508). In this case, the master wireless communication device 310 may apply the first relative RF offset and the first weight to a distributed consensus algorithm to estimate the first absolute RF offset, and apply the second relative RF offset and the second weight to the distributed consensus algorithm to estimate the second absolute RF offset.

When operation S508 is performed, the master wireless communication device 310 transmits an RF offset correction command including the second absolute RF offset to the slave wireless communication device 210 (S510).

When operation S510 is performed, the master wireless communication device 310 corrects its own RF offset using the first absolute RF offset (S512a), and the slave wireless communication device 210 corrects its own RF offset using the second absolute RF offset (S512b).

The master wireless communication device 310 may compare a current RF offset of the first RFIC 324 with the first absolute RF offset to calculate a correction value, apply the calculated correction value to the current RF offset to calculate a final offset, and correct the current RF offset of the first RFIC 324 to the final offset. The slave wireless communication device 210 may compare a current RF offset of the second RFIC 224 with the second absolute RF offset to calculate a correction value, apply the calculated correction value to the current RF offset to calculate a final offset, and correct the current RF offset of the second RFIC 224 to the final offset.

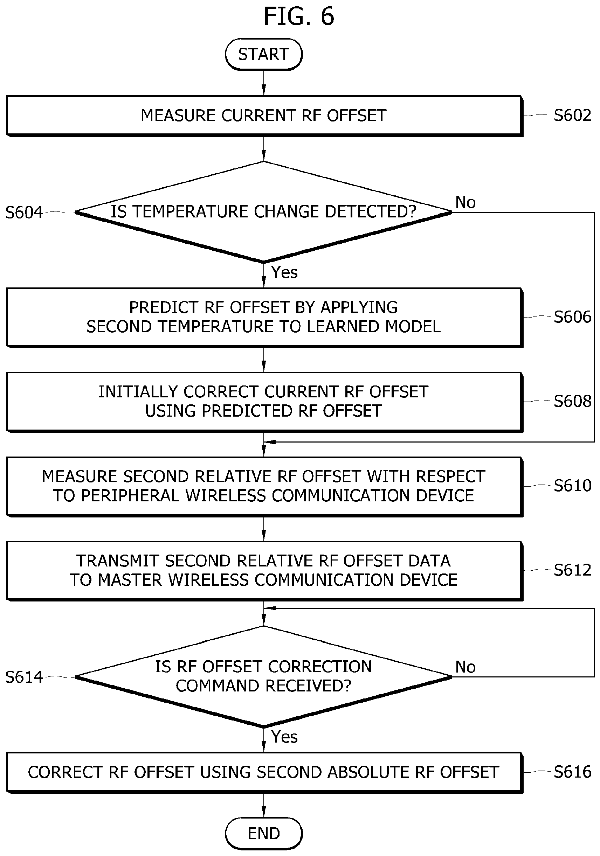

FIG. 6 is a flowchart for describing a method for correcting an RF offset of a slave wireless communication device according to embodiments of the present disclosure.

Referring to FIG. 6, a slave wireless communication device 210 measures a current RF offset (S602). In this case, the slave wireless communication device 210 may compare an oscillation frequency of an oscillation signal generated in an oscillator of a second RFIC 224 with a preset reference frequency (target frequency) to measure the current RF offset.

After operation S602 is performed, the slave wireless communication device 210 may determine whether a temperature change is detected on the basis of a second temperature measured through a second temperature sensor 240 (S604). That is, the slave wireless communication device 210 may determine whether the second temperature is different by a certain value or more from a previously measured temperature.

As a result of the determination in operation S604, when it is determined that the temperature change is detected, the slave wireless communication device 210 applies the second temperature to a model to predict an RF offset (S606), and initially corrects the current RF offset using the predicted RF offset (S608). The model may include a function of RF offsets against temperature. The model may be a learned model, such as a model trained on measurement data of corresponding temperatures and RF offsets

After operation S608 is performed, the slave wireless communication device 210 measures each of relative RF offsets with respect to peripheral wireless communication devices through RF communication (S610).

When operation S610 is performed, the slave wireless communication device 210 transmits measured second relative RF offset data to the master wireless communication device 310 (S612).

After operation S612 is performed, when an RF offset correction command including a second absolute RF offset is received from the master wireless communication device 310 (S614), the slave wireless communication device 210 corrects its own RF offset using the second absolute RF offset (S614). In this case, the slave wireless communication device 210 may compare the RF offset corrected in operation S608 with the second absolute RF offset to calculate a correction value, apply the calculated correction value to the RF offset corrected in operation S608 to calculate a final offset, and correct the RF offset corrected in operation S608 to the final offset.

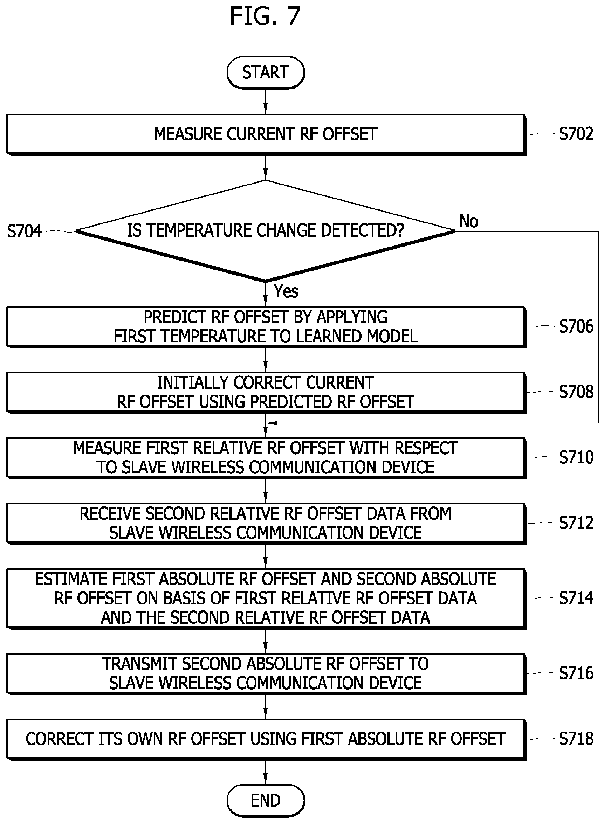

FIG. 7 is a flowchart for describing a method for correcting an RF offset of a master wireless communication device according to embodiments of the present disclosure.

Referring to FIG. 7, a master wireless communication device 310 measures a current RF offset (S702). In this case, the master wireless communication device 310 may compare an oscillation frequency of an oscillation signal generated in an oscillator of a first RFIC 324 with a preset reference frequency (target frequency) to measure the current RF offset.

After operation S702 is performed, the master wireless communication device 310 may determine whether a temperature change is detected on the basis of a first temperature measured through a first temperature sensor 340 (S704). That is, the master wireless communication device 310 may determine whether the first temperature is different by a certain value or more from a previously measured temperature.

As a result of the determination in operation S704, when it is determined that the temperature change is detected, the master wireless communication device 310 applies the first temperature to a model to predict an RF offset (S706), and initially corrects the current RF offset using the predicted RF offset (S708). The model may include a function of RF offsets against temperature. The model may be a learned model, such as a model trained on measurement data of corresponding temperatures and RF offsets

After operation S708 is performed, the master wireless communication device 310 measures each first relative RF offset with respect to peripheral slave wireless communication devices 210 through RF communication (S710).

After operation S710 is performed, when second relative RF offset data is received from a slave wireless communication device 210 (S712), the master wireless communication device 310 estimates a first absolute RF offset and a second absolute RF offset using first relative RF offset data and the second relative RF offset data (S714). In this case, the master wireless communication device 310 may apply the first relative RF offset data to a distributed consensus algorithm to estimate the first absolute RF offset, and apply the second relative RF offset data to the distributed consensus algorithm to estimate the second absolute RF offset.

When operation S714 is performed, the master wireless communication device 310 transmits an RF offset correction command including the second absolute RF offset to the slave wireless communication device 210 (S716) and corrects its own RF offset using the first absolute RF offset (S718). In this case, the master wireless communication device 310 may compare the RF offset corrected in operation S708 with the first absolute RF offset to calculate a correction value, apply the calculated correction value to the RF offset corrected in operation S708 to calculate a final offset, and correct the RF offset corrected in operation S708 to the final offset.

FIG. 8 is a flowchart for describing a distributed consensus algorithm according to embodiments of the present disclosure.

Referring to FIG. 8, a master wireless communication device 310 sets a transmitting RFIC estimation offset and a receiving RFIC estimation offset to "0" (S802), and calculates a first RF offset difference using a relative RF offset between a transmitting RFIC and a receiving RFIC (S804). In this case, the master wireless communication device 310 may calculate the first RF offset difference using Equation 1 described herein.

When operation S804 is performed, the master wireless communication device 310 applies the first RF offset difference to update the transmitting RFIC estimation offset and the receiving RFIC estimation offset (S806). In this case, the master wireless communication device 310 may update the transmitting RFIC estimation offset and the receiving RFIC estimation offset using Equation 2 described herein.

When operation S806 is performed, the master wireless communication device 310 calculates a second RF offset difference using the updated transmitting RFIC estimation offset and receiving RFIC estimation offset (S808).

When operation S808 is performed, the master wireless communication device 310 applies the second RF offset difference to update the transmitting RFIC estimation offset and the receiving RFIC estimation offset (S810). In this case, the master wireless communication device 310 may update the transmitting RFIC estimation offset and the receiving RFIC estimation offset using Equation 2 described herein.

Since a method of determining an absolute RF offset of a transmitting RFIC and a method of determining an absolute RF offset of a receiving RFIC are the same, only the transmitting RFIC will be described herein for convenience of description.

When operation S810 is performed, the master wireless communication device 310 calculates an amount of changes in estimation offset of the transmitting RFIC (S812) and determines whether the amount of changes in estimation offset of the transmitting RFIC is less than or equal to a threshold value (S814).

As a result of the determination in operation S814, when it is determined that the amount of changes in estimation offset of the transmitting RFIC is less than or equal to the threshold value, the master wireless communication device 310 determines the estimated transmitting RF offset when the amount of changes in estimation offset is less than or equal to the threshold value as the absolute RF offset of the transmitting RFIC (S816).

As the result of the determination in operation S814, when it is determined that the amount of changes in estimation offset of the transmitting RFIC is not less than or equal to the threshold value, the master wireless communication device 310 determines whether the number of iterations is greater than or equal to a maximum threshold number of iterations (S818).

As a result of the determination in operation S818, when it is determined that the number of iterations is greater than or equal to the maximum threshold number of iterations, the master wireless communication device 310 terminates the distributed consensus algorithm and determines an optimal transmitting RF estimation offset among estimated transmitting RF offsets up to now as the absolute RF offset (S820).

As the result of the determination in operation S818, when it is determined that the number of iterations is not greater than or equal to the maximum threshold number of iterations, the master wireless communication device 310 performs operation S808.

As described herein, according to the present disclosure, a master wireless communication device and a plurality of slave wireless communication devices can each measure a relative RF offset with respect to peripheral wireless communication devices, exchange the measured relative RF offsets with each other, and apply the relative RF offsets to a distributed consensus algorithm to estimate an absolute RF offset, and thus it is possible to consistently adjust the RF offsets throughout the system without an external reference, eliminate dependency on an external calibration device, and reduce battery pack production cost and time.

According to the present disclosure, by periodically measuring RF offsets even during operation of a battery pack and correcting the RF offsets on the basis of a result of measurement of the RF offsets, it is possible to immediately respond to RF offset fluctuations due to temperature changes or component aging and thus ensure long-term system stability.

According to the present disclosure, by automatically correcting RF offsets of wireless communication devices in a BMS using a distributed consensus algorithm, it is possible to correct an offset of an RFIC using only a software algorithm without additional hardware and thus reduce the complexity and cost of the system.

According to the present disclosure, by gradually correcting an offset of each wireless communication device (RFIC) on the basis of a periodically measured RF offset difference, it is possible to prevent system instability due to a sudden change in the offset of the RFIC and thus improve the communication accuracy of the entire system.

According to the present disclosure, by enabling all wireless communication devices (RFICs) to share information with each other and perform cooperative RF offset correction among multiple wireless communication devices (RFICs), it is possible to build a system that is robust to errors or extreme fluctuations in individual wireless communication devices (RFICs).

According to the present disclosure, by calculating weights according to the reliability or communication quality of each wireless communication device (RFIC) and applying the weights to the RF offset correction, it is possible to increase the accuracy and efficiency of the RF offset correction and thus enable more flexible and precise RF offset correction than a uniform correction method.

According to the present disclosure, an RF offset correction algorithm can operate without depending on the number or arrangement of wireless communication devices (RFICs), and thus enable application to battery systems of various sizes and configurations.

According to the present disclosure, by including logic for detecting abnormal operation or extreme RF offset values during an RF offset correction process, it is possible to increase the reliability and safety of a battery system.

According to the present disclosure, a master wireless communication device and a plurality of slave wireless communication devices can each measure a relative RF offset with respect to peripheral wireless communication devices, exchange the measured relative RF offsets with each other, and apply the relative RF offsets to a distributed consensus algorithm to estimate an absolute RF offset, and thus it is possible to consistently adjust the RF offsets throughout the system without an external reference, eliminate dependency on an external calibration device, and reduce battery pack production costs and time.

According to the present disclosure, by periodically measuring RF offsets even during operation of a battery pack and correcting the RF offsets on the basis of a result of measurement of the RF offsets, it is possible to immediately respond to RF offset fluctuations due to temperature changes or component aging and thus ensure long-term system stability.

According to the present disclosure, by automatically correcting RF offsets of wireless communication devices in a BMS using a distributed consensus algorithm, it is possible to correct an offset of an RFIC using only a software algorithm without additional hardware and thus reduce the complexity and cost of the system.

According to the present disclosure, by gradually correcting an offset of each wireless communication device (RFIC) on the basis of a periodically measured RF offset difference, it is possible to prevent system instability due to a sudden change in the offset of the RFIC and thus improve the communication accuracy of the entire system.

According to the present disclosure, by enabling all wireless communication devices (RFICs) to share information with each other and perform cooperative RF offset correction among multiple wireless communication devices (RFICs), it is possible to build a system that is robust to errors or extreme fluctuations in individual wireless communication devices (RFICs).

According to the present disclosure, by calculating weights according to the reliability or communication quality of each wireless communication device (RFIC) and applying the weights to the RF offset correction, it is possible to increase the accuracy and efficiency of the RF offset correction and thus enable more flexible and precise RF offset correction than a uniform correction method.

According to the present disclosure, an RF offset correction algorithm can operate without depending on the number or arrangement of wireless communication devices (RFICs), and thus enable application to battery systems of various sizes and configurations.

According to the present disclosure, by including logic for detecting abnormal operation or extreme RF offset values during an RF offset correction process, it is possible to increase the reliability and safety of a battery system.

However, effects that can be achieved through the present disclosure are not limited to the herein-described effects and other effects that are not described may be clearly understood by those skilled in the art from the detailed descriptions.

The embodiments described herein may be implemented, for example, as a method or process, a device, a software program, a data stream, or a signal. Although discussed in the context of a single type of implementation (for example, discussed only as a method), features discussed herein may also be implemented in other forms (for example, a device or a program). The device may be implemented by suitable hardware, software, firmware, and the like. The method may be implemented on a device, such as a processor that generally refers to a processing device including a computer, a microprocessor, an integrated circuit, a programmable logic device, etc. The processor includes a communication device such as a computer, a cell phone, a personal digital assistant (PDA), and other devices that facilitate communication of information between the device and end-users.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, herein.

Further Embodiments are set out in the following clauses:

Clause 1. A master wireless communication device comprising:

a first wireless communication unit for radio frequency (RF)-based wireless communication; and
a first processor configured to measure first relative RF offset data with respect to a plurality of slave wireless communication devices through the first wireless communication unit, receive second relative RF offset data from each slave wireless communication device, estimate each of a first absolute RF offset and a second absolute RF offset of each slave wireless communication device on a basis of the first relative RF offset data and the second relative RF offset data, correct an RF offset of the first wireless communication unit on a basis of the first absolute RF offset, and transmit to each slave wireless communication device the second absolute RF offset.

Clause 2. The master wireless communication device of clause 1, wherein the first wireless communication unit includes:

a first antenna array; and
a first radio frequency integrated circuit (RFIC) including an oscillator.

Clause 3. The master wireless communication device of clause 2, wherein the first processor compares a frequency of an RF signal received from each slave wireless communication device with an oscillation frequency of an oscillation signal generated in the oscillator of the first RFIC to measure the first relative RF offset data with respect to each slave wireless communication device.

Clause 4. The master wireless communication device of clause 2 or clause 3, wherein the first processor compares an oscillation frequency of an oscillation signal generated in the oscillator of the first RFIC with a preset reference frequency to measure a current RF offset.

Clause 5. The master wireless communication device of any one of clauses 1 - 4, wherein the first processor applies the first relative RF offset data and the second relative RF offset data to a distributed consensus algorithm to estimate the first absolute RF offset and the second absolute RF offset.

Clause 6. The master wireless communication device of clause 5, wherein the distributed consensus algorithm repeatedly performs a process of setting initial values of a transmitting RFIC estimation offset and a receiving RFIC estimation offset to "0," calculating a first RF offset difference using a relative RF offset between a transmitting RFIC and a receiving RFIC, the transmitting RFIC estimation offset, and the receiving RFIC estimation offset, updating the transmitting RFIC estimation offset and the receiving RFIC estimation offset using the first RF offset difference, and calculating a second RF offset difference using the updated transmitting RFIC estimation offset and receiving RFIC estimation offset, and determines an estimation offset when estimation offsets of the transmitting RFIC and the receiving RFIC converge, as an absolute RF offset.

Clause 7. A slave wireless communication device comprising:

a second wireless communication unit for radio frequency (RF)-based wireless communication; and
a second processor configured to measure second relative RF offset data with respect to a peripheral wireless communication device through the second wireless communication unit, transmit the second relative RF offset data to a master wireless communication device through the second wireless communication unit, and when a second absolute RF offset is received from the master wireless communication device, correct an RF offset of the second wireless communication unit on a basis of the second absolute RF offset.

Clause 8. The slave wireless communication device of clause 7, wherein the second wireless communication unit includes:

a second antenna array; and
a second radio frequency integrated circuit (RFIC) including an oscillator.

Clause 9. The slave wireless communication device of clause 8, wherein the second processor compares a frequency of an RF signal received from the peripheral wireless communication device with an oscillation frequency of an oscillation signal generated in the oscillator of the second RFIC to measure the second relative RF offset data.

Clause 10. The slave wireless communication device of clause 8 or clause 9, wherein the second processor compares an oscillation frequency of an oscillation signal generated in the oscillator of the second RFIC with a preset reference frequency to measure a current RF offset.

Clause 11. An operating method of a master wireless communication device, comprising:

measuring, by the master wireless communication device, first relative RF offset data with respect to a plurality of slave wireless communication devices through a first wireless communication unit;
when the master wireless communication device receives second relative RF offset data from each slave wireless communication device, estimating, by the master wireless communication device, each of a first absolute RF offset and a second absolute RF offset of each slave wireless communication device on a basis of the first relative RF offset data and the second relative RF offset data; and
correcting, by the master wireless communication device, an RF offset of the first wireless communication unit on a basis of the first absolute RF offset and transmitting to each slave wireless communication device the second absolute RF offset.

Clause 12. The operating method of clause 11, further comprising, before the measuring of the first relative RF offset data, comparing, by the master wireless communication device, an oscillation frequency of an oscillation signal generated in the oscillator of the first wireless communication unit with a preset reference frequency and measuring a current RF offset.

Clause 13. The operating method of clause 12 further comprising, after the measuring of the current RF offset, measuring, by the master wireless communication device, a first temperature inside the first wireless communication unit, applying the first temperature to a learning model to predict an RF offset, and initially correcting the current RF offset using the predicted RF offset.

Clause 14. The operating method of any one of clauses 11 - 13, wherein, in the estimating of the first absolute RF offset and the second absolute RF offset of each slave wireless communication device, the master wireless communication device applies the first relative RF offset data and the second relative RF offset data to a distributed consensus algorithm to estimate the first absolute RF offset and the second absolute RF offset.

Clause 15. The operating method of clause 11 - 14, further comprising dynamically adjusting, by the master wireless communication device, an RF offset correction cycle on a basis of a change in RF offset of the first wireless communication unit and at least one of the plurality of slave wireless communication devices.

## Claims

1. A master wireless communication device comprising:

   a first wireless communication unit for radio frequency-based, hereafter RF-based, wireless communication; and
   a first processor configured to measure first relative RF offset data with respect to each of at least one slave wireless communication device through the first wireless communication unit, receive second relative RF offset data from each slave wireless communication device, estimate each of a first absolute RF offset and a second absolute RF offset of each slave wireless communication device on a basis of the first relative RF offset data and the second relative RF offset data, correct an RF offset of the first wireless communication unit on a basis of the first absolute RF offset, and transmit to each slave wireless communication device the second absolute RF offset.

2. The master wireless communication device of claim 1, wherein the first wireless communication unit includes:

   a first antenna array; and
   a first radio frequency integrated circuit, hereafter RFIC, including an oscillator.

3. The master wireless communication device of claim 2, wherein the first processor compares a frequency of an RF signal received from each slave wireless communication device with an oscillation frequency of an oscillation signal generated in the oscillator of the first RFIC to measure the first relative RF offset data with respect to each slave wireless communication device.

4. The master wireless communication device of claim 2 or claim 3, wherein the first processor compares an oscillation frequency of an oscillation signal generated in the oscillator of the first RFIC with a preset reference frequency to measure a current RF offset.

5. The master wireless communication device of any one of claims 1 - 4, wherein the first processor applies the first relative RF offset data and the second relative RF offset data to a distributed consensus algorithm to estimate the first absolute RF offset and the second absolute RF offset.

6. The master wireless communication device of claim 5, wherein the distributed consensus algorithm repeatedly performs a process of setting initial values of a transmitting RFIC estimation offset and a receiving RFIC estimation offset to "0," calculating a first RF offset difference using a relative RF offset between a transmitting RFIC and a receiving RFIC, the transmitting RFIC estimation offset, and the receiving RFIC estimation offset, updating the transmitting RFIC estimation offset and the receiving RFIC estimation offset using the first RF offset difference, and calculating a second RF offset difference using the updated transmitting RFIC estimation offset and receiving RFIC estimation offset, and determines an estimation offset when estimation offsets of the transmitting RFIC and the receiving RFIC converge, as an absolute RF offset.

7. A slave wireless communication device comprising:

a second wireless communication unit for radio frequency-based, hereafter RF-based, wireless communication; and
a second processor configured to measure second relative RF offset data with respect to a peripheral wireless communication device through the second wireless communication unit, transmit the second relative RF offset data to a master wireless communication device through the second wireless communication unit, and when a second absolute RF offset is received from the master wireless communication device, correct an RF offset of the second wireless communication unit on a basis of the second absolute RF offset.

8. The slave wireless communication device of claim 7, wherein the second wireless communication unit includes:

a second antenna array; and
a second radio frequency integrated circuit, hereafter RFIC, including an oscillator.

9. The slave wireless communication device of claim 8, wherein the second processor compares a frequency of an RF signal received from the peripheral wireless communication device with an oscillation frequency of an oscillation signal generated in the oscillator of the second RFIC to measure the second relative RF offset data.

10. The slave wireless communication device of claim 8 or claim 9, wherein the second processor compares an oscillation frequency of an oscillation signal generated in the oscillator of the second RFIC with a preset reference frequency to measure a current RF offset.

11. An operating method of a master wireless communication device, comprising:

measuring, by the master wireless communication device, first relative RF offset data with respect to each of at least one slave wireless communication device through a first wireless communication unit;
when the master wireless communication device receives second relative RF offset data from each slave wireless communication device, estimating, by the master wireless communication device, each of a first absolute RF offset and a second absolute RF offset of each slave wireless communication device on a basis of the first relative RF offset data and the second relative RF offset data; and
correcting, by the master wireless communication device, an RF offset of the first wireless communication unit on a basis of the first absolute RF offset and transmitting to each slave wireless communication device the second absolute RF offset.

12. The operating method of claim 11, further comprising, before the measuring of the first relative RF offset data, comparing, by the master wireless communication device, an oscillation frequency of an oscillation signal generated in the oscillator of the first wireless communication unit with a preset reference frequency and measuring a current RF offset.

13. The operating method of claim 12 further comprising, after the measuring of the current RF offset, measuring, by the master wireless communication device, a first temperature inside the first wireless communication unit, applying the first temperature to a model to predict an RF offset, and initially correcting the current RF offset using the predicted RF offset.

14. The operating method of any one of claims 11 - 13, wherein, in the estimating of the first absolute RF offset and the second absolute RF offset of each slave wireless communication device, the master wireless communication device applies the first relative RF offset data and the second relative RF offset data to a distributed consensus algorithm to estimate the first absolute RF offset and the second absolute RF offset.

15. The operating method of claim 11 - 14, further comprising dynamically adjusting, by the master wireless communication device, an RF offset correction cycle on a basis of a change in RF offset of the first wireless communication unit and at least one of the plurality of slave wireless communication devices.

# FIG. 1

# FIG. 2

310

MASTER WIRELESS COMMUNICATION DEVICE

320

350

| FIRST WIRELESS COMMUNICATION UNIT | FIRST PROCESSOR | FIRST MEMORY ～330 |
| FIRST ANTENNA ARRAY 322 | | |
| FIRST RFIC 324 | | FIRST TEMPERATURE SENSOR ～340 |

# FIG. 3

210

SLAVE WIRELESS COMMUNICATION DEVICE

220

250

| SECOND WIRELESS COMMUNICATION UNIT | SECOND PROCESSOR | SECOND MEMORY ～230 |
| SECOND ANTENNA ARRAY 222 | | |
| SECOND RFIC 224 | | SECOND TEMPERATURE SENSOR ～240 |

# FIG. 4

| SLAVE WIRELESS COMMUNICATION DEVICE | ~210 | | MASTER WIRELESS COMMUNICATION DEVICE | ~310 |

MEASURE RELATIVE RF OFFSET BETWEEN RFICS ──S402

TRANSMIT SECOND RELATIVE
RF OFFSET DATA (S404)

S406── ESTIMATE FIRST AND SECOND ABSOLUTE RF OFFSETS

TRANSMIT RF OFFSET CORRECTION
COMMAND (S408)

CORRECT RF OFFSET OF FIRST RFIC ON BASIS OF FIRST ABSOLUTE RF OFFSET

CORRECT RF OFFSET OF SECOND RFIC ON BASIS OF SECOND ABSOLUTE RF OFFSET

S410b

S410a

## FIG. 5

| SLAVE WIRELESS COMMUNICATION DEVICE | —210 | | MASTER WIRELESS COMMUNICATION DEVICE | —310 |

MEASURE RELATIVE RF OFFSET AND SIGNAL QUALITY BETWEEN RFICS —S502

TRANSMIT SECOND RELATIVE RF OFFSET
DATA AND SECOND SIGNAL
QUALITY DATA (S504)

S506 — CALCULATE FIRST AND SECOND WEIGHTS ON BASIS
OF FIRST AND SECOND SIGNAL QUALITY DATA

S508 — ESTIMATE FIRST AND SECOND
ABSOLUTE RF OFFSETS

TRANSMIT RF OFFSET CORRECTION
COMMAND (S510)

CORRECT RF OFFSET OF FIRST RFIC
ON BASIS OF FIRST ABSOLUTE
RF OFFSET

CORRECT RF OFFSET OF SECOND
RFIC ON BASIS OF SECOND
ABSOLUTE RF OFFSET

S512b

S512a

25

# FIG. 6

START

MEASURE CURRENT RF OFFSET —S602

S604— IS TEMPERATURE CHANGE DETECTED? No

Yes

PREDICT RF OFFSET BY APPLYING
SECOND TEMPERATURE TO LEARNED MODEL —S606

INITIALLY CORRECT CURRENT RF OFFSET
USING PREDICTED RF OFFSET —S608

MEASURE SECOND RELATIVE RF OFFSET WITH RESPECT
TO PERIPHERAL WIRELESS COMMUNICATION DEVICE —S610

TRANSMIT SECOND RELATIVE RF OFFSET DATA
TO MASTER WIRELESS COMMUNICATION DEVICE —S612

S614— IS RF OFFSET CORRECTION
COMMAND RECEIVED? No

Yes

CORRECT RF OFFSET USING SECOND ABSOLUTE RF OFFSET —S616

END

# FIG. 7

START

MEASURE CURRENT RF OFFSET — S702

S704 — IS TEMPERATURE CHANGE DETECTED? — No

Yes

PREDICT RF OFFSET BY APPLYING
FIRST TEMPERATURE TO LEARNED MODEL — S706

INITIALLY CORRECT CURRENT
RF OFFSET USING PREDICTED RF OFFSET — S708

MEASURE FIRST RELATIVE RF OFFSET WITH RESPECT
TO SLAVE WIRELESS COMMUNICATION DEVICE — S710

RECEIVE SECOND RELATIVE RF OFFSET DATA FROM
SLAVE WIRELESS COMMUNICATION DEVICE — S712

ESTIMATE FIRST ABSOLUTE RF OFFSET AND SECOND ABSOLUTE
RF OFFSET ON BASIS OF FIRST RELATIVE RF OFFSET DATA
AND THE SECOND RELATIVE RF OFFSET DATA — S714

TRANSMIT SECOND ABSOLUTE RF OFFSET TO
SLAVE WIRELESS COMMUNICATION DEVICE — S716

CORRECT ITS OWN RF OFFSET USING FIRST ABSOLUTE RF OFFSET — S718

END

# FIG. 8

START

SET TRANSMITTING RFIC ESTIMATION OFFSET AND RECEIVING RFIC ESTIMATION OFFSET TO "0" — S802

CALCULATE FIRST RF OFFSET DIFFERENCE — S804

UPDATE TRANSMITTING RFIC ESTIMATION OFFSET AND RECEIVING RFIC ESTIMATION OFFSET BY APPLYING FIRST RF OFFSET DIFFERENCE — S806

CALCULATE SECOND RF OFFSET DIFFERENCE USING UPDATED TRANSMITTING RFIC ESTIMATION OFFSET AND RECEIVING RFIC ESTIMATION OFFSET — S808

UPDATE TRANSMITTING RFIC ESTIMATION OFFSET AND RECEIVING RFIC ESTIMATION OFFSET BY APPLYING SECOND RF OFFSET DIFFERENCE — S810

CALCULATE AMOUNT OF CHANGES IN ESTIMATION OFFSET OF TRANSMITTING RFIC — S812

S814 — AMOUNT OF CHANGES IN ESTIMATION OFFSET ≤ THRESHOLD VALUE? — No

S818 — No — NUMBER OF ITERATIONS ≥ MAXIMUM THRESHOLD NUMBER OF ITERATIONS?

Yes — S816 — DETERMINE UPDATED TRANSMITTING RFIC ESTIMATION OFFSET AS ABSOLUTE RF OFFSET

Yes — S820 — DETERMINE OPTIMAL TRANSMITTING RF ESTIMATION OFFSET AS ABSOLUTE RF OFFSET

END

Europäisches
Patentamt
European
Patent Office
Office européen
des brevets

**EUROPEAN SEARCH REPORT**

Application Number

EP 25 20 1684

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 199 385 A1 (HUAWEI TECH CO LTD [CN]) 21 June 2023 (2023-06-21) | 7-10 | INV. H04W56/00 |
| A | * abstract * * * paragraphs [0007] - [0010] * * paragraphs [0062] - [0079] * * figures * * claims * | 1-6, 11-15 | |
| A | US 2009/097439 A1 (LEE SEOUNG BOK [KR]) 16 April 2009 (2009-04-16) * abstract * * * paragraphs [0028] - [0032] * * figures * * claims * | 1-15 | |

-----

-----

TECHNICAL FIELDS
SEARCHED      (IPC)

H04W

The present search report has been drawn up for all claims

| Place of search | Date of completion of the search | Examiner |
|---|---|---|
| The Hague | 5 February 2026 | Dejonghe, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 1684

05-02-2026

| Patent document cited in search report | | Publication date | Patent family member(s) | | Publication date |
|---|---|---|---|---|---|
| EP 4199385 | A1 | 21-06-2023 | CN | 114124276 A | 01-03-2022 |
| | | | EP | 4199385 A1 | 21-06-2023 |
| | | | US | 2023213962 A1 | 06-07-2023 |
| | | | WO | 2022041936 A1 | 03-03-2022 |
| US 2009097439 | A1 | 16-04-2009 | KR | 20090038534 A | 21-04-2009 |
| | | | US | 2009097439 A1 | 16-04-2009 |

EPO FORM P0459

For more details about this annex : see Official Journal of the European Patent Office, No. 12/82